(19) **Europäisches Patentamt**
**European Patent Office**
**Office européen des brevets**

(11) **EP 3 693 697 B1**

## (12) EUROPEAN PATENT SPECIFICATION

(45) Date of publication and mention
of the grant of the patent:
**22.06.2022 Bulletin 2022/25**

(21) Application number: **19155778.4**

(22) Date of filing: **06.02.2019**

(51) International Patent Classification (IPC):
**G01B 21/04** $^{(2006.01)}$ **G01B 11/24** $^{(2006.01)}$

(52) Cooperative Patent Classification (CPC):
**G01B 11/002; G01B 21/042**

(54) **METHOD FOR CALIBRATING A 3D MEASUREMENT ARRANGEMENT AND 3D MEASUREMENT ARRANGEMENT**

VERFAHREN ZUR KALIBRIERUNG EINER 3D-MESSANORDNUNG SOWIE 3D-MESSANORDNUNG

PROCÉDÉ D'ÉTALONNAGE D'UN AGENCEMENT DE MESURE 3D ET AGENCEMENT DE MESURE 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.08.2020 Bulletin 2020/33**

(73) Proprietor: **OptiNav Sp. z o.o.**
**76-200 Slupsk (PL)**

(72) Inventors:
• **Kraszewski, Maciej**
**76-200 Slupsk (PL)**

• **Wójcik, Adrian**
**88-220 Osieciny (PL)**
• **Jaworski, David**
**76-200 Slupsk (PL)**

(74) Representative: **Witte, Weller & Partner**
**Patentanwälte mbB**
**Postfach 10 54 62**
**70047 Stuttgart (DE)**

(56) References cited:
**EP-A1- 2 993 002     US-A1- 2008 239 327**
**US-A1- 2010 017 178**

**Description**

The present invention relates to a method for calibrating a 3D measurement arrangement and to a 3D measurement arrangement that can be calibrated using the method.

A 3D measurement arrangement according to the present disclosure is capable of providing 3D coordinates for selected measurement points on a measurement object. Recording a plurality of such 3D coordinates allows to measure physical dimensions and/or shape characteristics of measurement objects, such as car body parts, turbine blades, mechanical components of medical devices and many others by way of example. As will be readily acknowledged, the 3D coordinates are defined with respect to a coordinate system that is typically established by the measurement arrangement.

It is well known that such a measurement arrangement requires calibration in order to be able to provide 3D coordinate measurements within predefined specifications. Calibration helps to ensure that measurement results from one measurement arrangement are comparable to measurement results from another measurement arrangement. It is also well known that calibration of a measurement arrangement should be repeated from time to time, because individual characteristics of the measurement arrangement may change due to wear and/or changes in the environment of the measurement arrangement, such as temperature variations.

US 2008/0239327 A1 discloses a method for calibrating a 3D measurement arrangement that comprises a manually operated touch probe and a 3D vision subsystem configured for tracking positions of the touch probe within a measurement volume. The touch probe carries a plurality of markers, such as infrared LEDs, which form a marker pattern. The touch probe has a stylus with a stylus tip that is intended to be brought into contact with a selected measurement point on a measurement object. Determining the position of the touch probe using the marker pattern allows to determine 3D coordinates of the selected measurement point. The calibration method uses a portable calibration jig having a plurality of reference features that are touched one after the other by the manual touch probe. The touch probe is oriented in a number of different orientations at each reference feature and a plurality of coordinate data is recorded using the vision subsystem. Calibration data is determined based on the recorded 3D vision subsystem coordinate data.

The method of US 2008/0239327 A1 allows for global calibration and encompasses calibrating camera frame distortion errors as well as probe form errors. The method is particularly proposed for low cost portable versions of a multi camera vision-based measurement arrangement. Modern manufacturing environments and measurement arrangements, however, fuel a demand for automated measurement arrangements providing higher measurement accuracies within larger measurement volumes.

US 2010/017178 A1 discloses a method and a 3D measurement arrangement according to the preamble of claims 1 and 11.

In view of the above, it is an object of the present disclosure to provide for an improved method that allows efficient calibration and efficient re-calibration of a 3D measurement arrangement that comprises a 3D vision subsystem and a 3D coordinate sensor. It is also an object to provide for a 3D measurement arrangement that enables automated 3D measurements with high accuracy and easy calibration.

In view of the above, there is provided a method for calibrating a 3D measurement arrangement according to claim 1 that comprises a 3D vision subsystem, a 3D coordinate sensor and a processing unit having a non-volatile memory, with the 3D vision subsystem defining a vision measurement volume and a vision coordinate system, with the 3D coordinate sensor being moveable within the vision measurement volume and defining a sensor measurement volume and a sensor coordinate system, with the 3D coordinate sensor carrying at least one optical tracking marker and being configured for recording first 3D coordinate data on a measurement object relative to the sensor coordinate system, and with the 3D vision subsystem being configured for recording second 3D coordinate data representing a respective marker position of said at least one optical tracking marker relative to the vision coordinate system, the method comprising the steps of positioning a calibration artifact in the vision measurement volume, recording a plurality of first 3D coordinate data on the calibration artifact using the 3D coordinate sensor in a series of recording steps, wherein the 3D coordinate sensor is moved in the vision measurement volume and positioned at various sensor positions relative to the calibration artifact from one recording step to another recording step in the series of recording steps, recording a plurality of second 3D coordinate data at said various sensor positions in the vision measurement volume, providing a reference coordinate system, computing both at least one marker coordinate position and a position of the sensor coordinate system relative to the reference coordinate system on the basis of the plurality of first 3D coordinate data and the plurality of second 3D coordinate data using joint computing steps, and storing calibration data into the non-volatile memory, with the calibration data representing the at least one marker coordinate position and the position of the sensor coordinate system relative to the reference coordinate system, wherein the joint computing steps comprise minimizing a joint error matrix comprising a plurality of first and second error matrix terms, with the first error matrix terms representing marker positions at the various sensor positions, and with the second error matrix terms representing positions on the calibration artifact.

There is also provided a 3D measurement arrangement according to claim 11 comprising a 3D vision subsystem, a 3D coordinate sensor and a processing and control unit having a non-volatile memory, with the 3D vision subsystem defining a vision measurement volume and a vision coordinate system, with the 3D coordinate sensor being arranged on a fixture so as to be automatically moveable within the vision measurement volume and defining a sensor measurement volume and a sensor coordinate system, with the 3D coordinate sensor carrying at least one optical tracking marker and being configured for recording first 3D coordinate data on a measurement object relative to the sensor coordinate system, and with the 3D vision subsystem being configured for recording second 3D coordinate data representing a respective marker position of said at least one optical tracking marker relative to the vision coordinate system, wherein the processing and control unit is configured to determine calibration data by executing the steps of: recording a plurality of first 3D coordinate data on a calibration artifact positioned in the vision measurement volume by using the 3D coordinate sensor in a series of recording steps, wherein the processing and control unit positions the 3D coordinate sensor in the vision measurement volume at various sensor positions relative to the calibration artifact from one recording step to another recording step in the series of recording steps, recording a plurality of second 3D coordinate data at said various sensor positions in the vision measurement volume using the 3D vision subsystem, providing a reference coordinate system, computing both at least one marker coordinate position and a position of the sensor coordinate system relative to the reference coordinate system on the basis of the plurality of first 3D coordinate data and the plurality of second 3D coordinate data using joint computing steps, and storing calibration data into the non-volatile memory, with the calibration data representing the at least one marker coordinate position and the position of the sensor coordinate system relative to the reference coordinate system, wherein the joint computing steps comprise minimizing a joint error matrix comprising a plurality of first and second error matrix terms, with the first error matrix terms representing marker positions at the various sensor positions, and with the second error matrix terms representing positions on the calibration artifact.

The new method and the corresponding arrangement exploit an integrated approach that combines 3D coordinate data from both measurement subsystems in joined computing steps. Accordingly, first 3D coordinate data, which represent a position on the calibration artifact (including a position of the calibration artifact itself) in the sensor coordinate system, are used in the process of determining marker positions in the vision coordinate system. Joint computing steps mean computing steps that process both the first 3D coordinate data and the second 3D coordinate data as input variables in order to achieve calibration data that is optimized with respect to both types of 3D coordinate input data at any time. Preferably, both the first 3D coordinate data and the second 3D coordinate data are processed as input variables at the same time in the joint computing steps. Both the first 3D coordinate data and the second 3D coordinate data thus equally contribute to the calibration data.

As an alternative to the new method and the corresponding arrangement, it would be feasible to separate the calibration process in at least two parts, where the first 3D coordinate data are processed separately from the second 3D coordinate data and calibration takes place using both types of data sequentially. The presently proposed integrated approach using joint computing steps based on the first 3D coordinate data and the second 3D coordinate data is beneficial, because it avoids that small inaccuracies in the determination of the marker position may result in large errors of the 3D measurement arrangement.

In real applications, the 3D coordinate sensor typically carries a plurality of optical tracking markers arranged on various side walls such that at least one optical tracking marker from the plurality of optical tracking markers is visible to the 3D vision subsystem regardless of an instantaneous position and orientation of the 3D coordinate sensor within the vision measurement volume. Preferably, the optical tracking markers each have an individual coding, such as a color coding or a pattern coding by way of example, in order to allow to identify each optical tracking marker in a series of images. It is not necessary that one specific optical tracking marker is always visible to the 3D vision subsystem regardless of the instantaneous position and orientation of the 3D coordinate sensor. It suffices if the plurality of optical tracking markers distributed over the 3D coordinate sensor allow to cross correlate the various sensor positions and orientations over the sequence of measurements. By way of example, the 3D coordinate sensor may have six side faces. A first optical tracing marker may be arranged on a first side face. A second optical tracing marker may be arranged on a second side face. A third optical tracing marker may be arranged on a third side face. It suffices if at least one from the first, second and third optical tracing markers is visible to the 3D vision subsystem at any time during the measurements, but it need not be the same optical tracking marker.

The joint computing steps comprise minimizing a joint error matrix comprising a plurality of first and second error matrix terms, with the first error matrix terms representing marker positions at the various sensor positions, and with the second error matrix terms representing positions on the calibration artifact. In preferred exemplary embodiments, the joint error matrix may be minimized using a least square approach, such as the Levenberg-Marquardt algorithm. However, other algorithms suitable for minimizing a plurality of error matrix terms of a joint error matrix may also be feasible. Minimizing the afore-mentioned joint error matrix provides a very efficient approach for determining the above-mentioned calibration data. The refinement also helps to implement the new method in a manner so as to allow automatic re-calibration of the 3D measurement arrangement provided that the calibration artifact is positioned in the vision measurement volume.

According to a refinement, initial marker coordinate positions and an initial position of the sensor coordinate system relative to the reference coordinate system are estimated from CAD design data.

The CAD design data may advantageously represent a spatial relationship between the 3D coordinate sensor and the 3D vision subsystem at various movement positions of the 3D coordinate sensor. The refinement is advantageous, because it facilitates a fast and efficient determination of the calibration data by enhancing convergence of the error matrix solution.

In a further refinement, the calibration artifact is held stationary within the vision measurement volume during the series of recording steps.

In this refinement, the calibration artifact provides a fixed reference datum for the calibration process, which helps to determine the above-mentioned calibration data in a very efficient manner. In general, however, it is feasible that the calibration artifact is moved to a plurality of defined positions within the calibration process.

In a further refinement, the plurality of first 3D coordinate data are determined with respect to a single feature on the calibration artifact. Alternatively, a plurality of features on the calibration artifact could be used in other refinements.

The preferred refinement also helps to implement the new method and the corresponding arrangement in a highly efficient manner, which allows easy and quick re-calibration of the measurement arrangement on site.

In a further refinement, the calibration artifact comprises a mechanical feature, such as a sphere and/or a hole in a calibration body.

Other refinements may use non-mechanical features, such as optical patterns. Use of mechanical features, such as a sphere, a cylinder or a hole, are advantageous, because such features can be provided in a cost-efficient manner. Moreover, such features correspond to "real world" measurement features, such that the calibration data is optimized with respect to real world scenarios.

In a further refinement, the 3D coordinate sensor is arranged on a fixture and the fixture is automatically moved within the vision measurement volume in order to move the 3D coordinate sensor from one recording step to another recording step in the series of recording steps.

The fixture according to this refinement may be a robot, such as a six-axis-robot by way of example, or another movement mechanism, such as a column-type, gantry-type or portal-type movement mechanism. The refinement helps to gather a high amount of coordinate data in rather short time periods and therefore helps to implement the new method and arrangement in an efficient manner.

In a further refinement, a further optical tracking marker is attached to the fixture, and the marker coordinate positions and the position of the sensor coordinate system relative to the reference coordinate system are computed on the basis of the further optical tracking marker.

According to this refinement, at least one optical tracking marker is attached to the fixture carrying the 3D coordinate sensor. Said at least one optical tracking mark is used in the calibration process. The refinement facilitates a marker distribution in such a manner that at least one optical tracking marker is permanently visible to the 3D vision subsystem, which facilitates an efficient computation of the calibration data.

In a further refinement, the 3D coordinate sensor has a plurality of optical tracking markers attached in such a manner that at least two optical tracking markers are visible to the 3D vision subsystem at a time, and the second 3D coordinate data are recorded for the at least two optical tracking markers at a time.

According to this refinement, a plurality of optical tracking markers are used in the calibration process, which allows for even higher accuracy due to the increased amount of information available for determining the calibration data. Accordingly, the plurality of tracking markers are used and the calibration data are computed on the basis of the plurality of optical tracking markers.

In a further refinement, the 3D coordinate sensor has a plurality of optical tracking markers attached, with a plurality of optical tracking markers comprising a first group of optical tracking markers that are visible to the 3D vision subsystem at any time during the series of recording steps, and comprising a second group of optical tracking markers that are not visible to the 3D vision subsystem at any time during the series of recording steps, wherein the marker coordinate positions and the position of the sensor coordinate system relative to the reference coordinate system are exclusively computed on the basis of the first group of optical tracking markers. The first group and/or the second group according to this refinement may each comprise one or more optical tracking markers.

According to this refinement, the calibration data is computed on the basis of one or more optical tracking markers that are always visible to the 3D vision subsystem during the series of recording steps, while optical tracking markers that are not always visible to the 3D vision subsystem are disregarded. This refinement also facilitates an efficient implementation of the new method and arrangement and contributes to achieving high accuracy, because this refinement facilitates advantageous correlation of the 3D coordinate data from the series of recording steps.

In a further refinement, the 3D coordinate sensor comprises a 3D fringe projection sensor. In further refinements, the 3D coordinate sensor may comprise a laser probe, an interferometric probe, a chromatic probe or any other kind of non-contact or contact probe that is capable of providing 3D coordinate data for measurement points on the calibration artifact.

In the preferred refinements, the 3D coordinate sensor provides 3D coordinate data not only for single measurement points on the calibration artifact, but for larger areas. Such a 3D coordinate sensor facilitates high speed measurements and thus allows to capture a high amount of measurement data in short time. Accordingly, such a 3D coordinate sensor is not only beneficial for actually measuring a measuring object, but also for calibration purposes, because the accuracy of the calibration data benefits from a high amount of available coordinate data.

It goes without saying that the features mentioned above and those yet to be explained further below cannot only be used in the combination of features explicitly disclosed, but also in other combinations or on their own without departing from the scope of the present disclosure as defined by the claims. In the drawing

Fig. 1    shows an exemplary embodiment of the 3D measurement arrangement in the context of measuring a car body part,

Fig. 2    shows the measurement arrangement of Fig. 1 during calibration, and

Fig. 3    shows a flow chart for illustrating an exemplary embodiment of the new method.

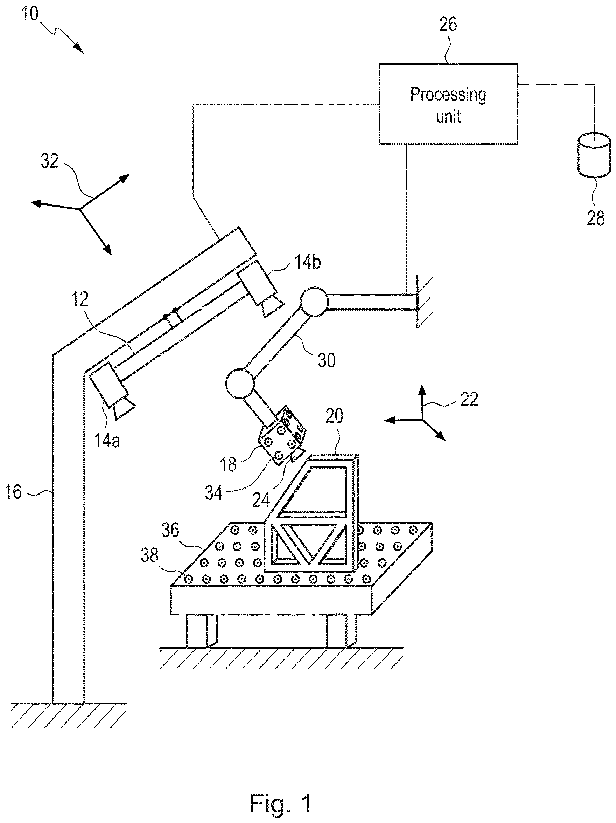

In Fig. 1, an exemplary embodiment of the new measurement arrangement is designated by reference number 10 in its entirety.

The measurement arrangement 10 comprises a 3D vision subsystem 12 including a number of cameras 14, with two cameras 14a, 14b in a stereo arrangement being shown here by way of example. While it is preferable that the 3D vision subsystem comprises a plurality of cameras, it is generally feasible to implement other exemplary embodiments with only one camera. Likewise, a stereo arrangement of cameras 14a, 14b may be advantageous, but it is also feasible that a plurality of cameras 14a, 14b do not form a stereo vision subsystem. Accordingly, cameras 14a, 14b may be arranged in a non-stereo arrangement and may therefore lack a precisely known stereo basis and/or a substantially parallel line of sight. In some exemplary embodiments, the 3D vision subsystem may be configured to determine a 6-degree-of-freedom (6-DOF) pose of optical tracking markers in accordance with a method as it is disclosed in EP 3 321 883 A1. 3D vision subsystem 12 may be arranged on a rigid support structure 16, which may be stationary in some exemplary embodiments.

Measurement arrangement 10 further comprises a 3D coordinate sensor 18, which may be a 3D fringe projection sensor in some exemplary embodiments. By way of example, 3D coordinate sensor 18 may be a 3D fringe projection sensor as it is offered and sold by Carl Zeiss Optotechnik GmbH, Georg-Wiesbock-Ring 12, 83115 Neubeuern, Germany under the brand name COMET. More generally, 3D coordinate sensor 18 may be any meteorology sensor that is capable of providing 3D coordinates for measurement points on a measurement object 20 relative to a sensor coordinate system 22. Typically, sensor coordinate system 22 is defined by 3D coordinate sensor 18 and moves together with 3D coordinate sensor 18, if coordinate sensor 18 is moved relative to measurement object 20.

In preferred exemplary embodiments, 3D coordinate sensor 18 is a non-contact coordinate sensor and it may comprise a (further) camera 24. In such a case, sensor coordinate system 22 may be defined in such a manner that the image sensor of camera 24 defines an x-y-plane and the line of sight of camera 24 defines a z-axis.

As is indicated at reference number 26, measurement arrangement 10 further comprises a processing unit. Typically, processing unit 26 comprises a commercial data processor (not explicitly shown here) and a number of memories which may include volatile random access memories and non-volatile memories. By way of example, a non-volatile memory is indicated at reference number 28. Processing unit 26 may be implemented using any commercially available computer operating under Windows, Linux, MACOS, by way of example.

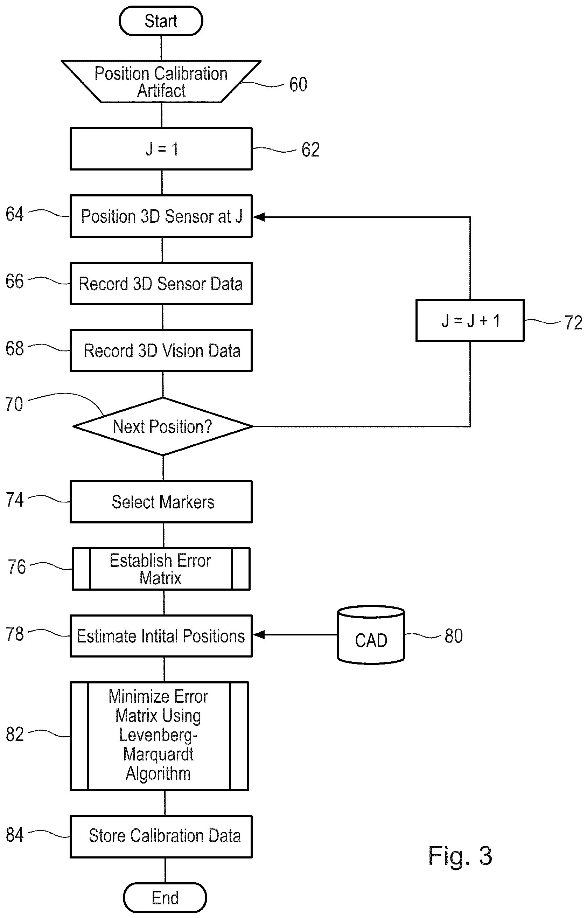

As can be seen from Fig. 1, 3D coordinate sensor 18 may be arranged on a moveable fixture, such as robot arm 30, in order to be automatically moveable relative to measurement object 20. Other exemplary embodiments may comprise a fixture in the form of a portal-type movement mechanism, a column-type movement mechanism, a gantry-type movement mechanism, a hexapod or any other kind of movement mechanism. Processing unit 26 may comprise a movement controller for automatically moving 3D coordinate sensor 18 in accordance with a measurement program and/or calibration program.

3D vision subsystem 12 typically defines a vision coordinate system 32 that is different from sensor coordinate system 22. the preferred exemplary embodiments, vision subsystem 12 is configured to determine a spatial position of one or more optical tracking markers 34 attached to 3D coordinate sensor 18 with respect to vision coordinate system 32.

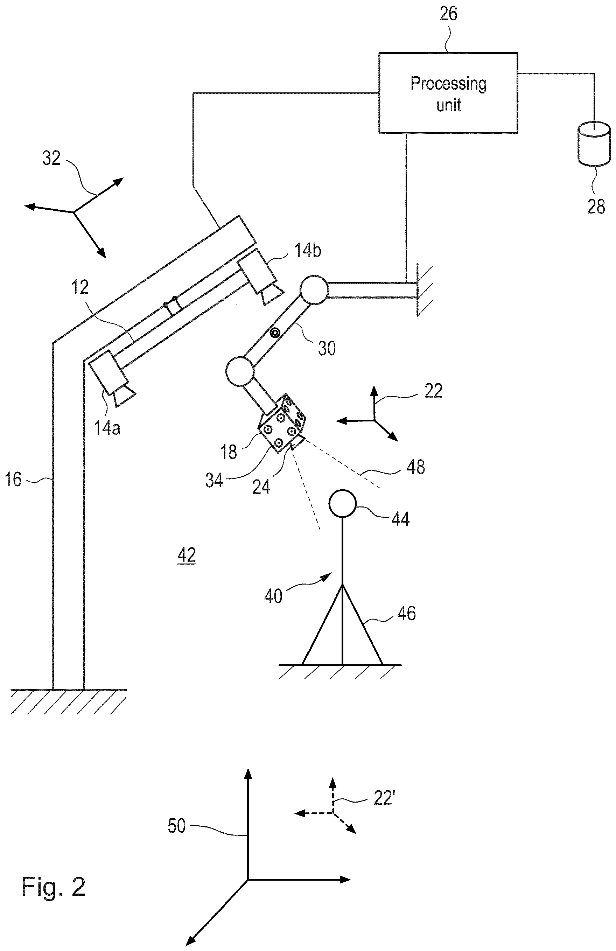

As is shown in Fig. 1, measurement object 20, which is a car body part by way of example, may be supported on a holding structure, such as workpiece table 36. In some exemplary embodiments, the holding structure may also carry markers 38, the position of which can be determined by 3D vision subsystem 12. One or more further optical tracking markers 39 may be arranged on fixture 30 (cf. Fig. 2)

In order to carry out a measurement on measurement object 20, 3D coordinate sensor 18 is positioned at one or more spatial positions relative to measurement object 20. 3D coordinates relative to sensor coordinate system 22 are determined for a plurality of measurement points on measurement object 20. In some exemplary embodiments, 3D coordinate sensor 18 may be moved around measurement object 20 in order to record 3D coordinate data on measurement object 20 in such a manner that the 3D coordinate data represent a full 3D scan of measurement object 20.

3D vision subsystem 12 may advantageously be used for tracking the movements of 3D coordinate sensor 18 during the measurement process relative to vision coordinate system 32. Using processing unit 26, 3D coordinates of 3D coordinate sensor 18 taken at various positions may be aligned and combined by means of vision coordinate system 32 and appropriate coordinate transformations, as it is known to those skilled in the art. In order to achieve this with high measurement accuracy, it is required to calibrate 3D measurement arrangement 10 in order to get calibration data that allows to correct for any individual measurement errors of 3D coordinate sensor 18 and 3D vision subsystem 12. A preferred exemplary embodiment for such a calibration process is explained in the following with reference to Figs. 2 and 3, where same reference numbers are used to designate same elements as in Fig. 1.

In Fig. 2, a calibration artifact 40 is placed in the measuring volume 42 of vision subsystem 12. Calibration artifact 40 comprises a sphere 44 in this exemplary embodiment, which sphere is arranged on a tripod 46 or some other suitable support structure. As shown in Fig. 2, 3D coordinate sensor 18 is also positioned in such a manner that sphere 44 is within measuring volume 48 of 3D coordinate sensor 18. As can be seen from Fig. 2, measuring volume 48 of 3D coordinate sensor 18 is typically much smaller than measuring volume 42 of 3D vision subsystem 12.

Reference number 50 designates a reference coordinate system or tool coordinate system. Reference coordinate system 50 may be identical to vision coordinate system 32, or it may be related to vision coordinate system 32 by some sort of coordinate transformation. As will be acknowledged by those skilled in the art, sensor coordinate system 22, which moves together with 3D coordinate sensor 18 within measurement volume 42, may have a varying position and orientation with respect to the reference coordinate system 50 depending on the position and orientation of 3D coordinate sensor 18. It is desirable that the respective pose of sensor coordinate system 22 relative to reference coordinate system 50 is determined in the course of the calibration process with high accuracy so that the resulting calibration data can be used in the process of measuring a measuring object 20, as explained with reference to Fig. 1.

Fig. 3 illustrates an exemplary embodiment of a calibration method that provides, inter alia, the respective pose of sensor coordinate system 22 relative to reference coordinate system 50 as a function of coordinate sensor movement.

According to step 60, calibration artifact 40 is positioned in the measurement volume 42 of measurement arrangement 10. According to step 62, a counter variable J is set. According to step 64, 3D coordinate sensor 18 is positioned at position J, i.e. at a first position according to counter variable J set in step 62. According to step 66, first 3D coordinate data is recorded by means of coordinate sensor 18 on calibration artifact 40. The first 3D coordinate data may represent a coordinate position of the center of the sphere 44 in relation to sensor coordinate system 22. According to step 68, second 3D coordinate data is recorded using 3D vision subsystem 12. Second coordinate data recorded in step 68 may represent a spatial position of optical tracking marker 34 relative to vision coordinate system 32. Steps 66 and 68 may be carried out simultaneously in some preferred exemplary embodiments.

According to step 70, it is decided if coordinate sensor 18 is to be positioned at a further measurement position relative to calibration artifact 40. If in the affirmative, counter variable J is incremented in step 72 and the procedure loops back to step 64.

When the series of recording steps 64 to 68 is finished, marker images of the one or more tracking markers 34 are selected from the recorded vision data in accordance with step 74. In preferred exemplary embodiments, the calibration procedure is carried out on the basis of optical tracking markers 34 that are always visible to the vision subsystem 12 at any time during the series of recording steps 64 to 68. However, other exemplary embodiments may use markers and corresponding marker images that are not always visible to the vision subsystem 12 throughout the series of recording steps 64 to 68.

According to step 76, an error matrix E is established in the following form:

$$E = \begin{bmatrix} E_{\mathrm{m}} & E_{\mathrm{a}} \end{bmatrix},$$

where $\boldsymbol{E}_{\mathrm{m}}$ is a marker error matrix and $\mathbf{E}_{\mathrm{a}}$ is an artifact error matrix.

The marker error matrix $\boldsymbol{E}_{\mathrm{m}}$ may be defined as follows:

$$E_{\mathrm{m}} = \begin{bmatrix} E_{\mathrm{m},1} & ... & E_{\mathrm{m,M}} \end{bmatrix},$$

$$E_{\mathrm{m,j}} = \begin{bmatrix} X_{1,j} - \widetilde{X}_{1,j} & ... & X_{N,j} - \widetilde{X}_{N,j} \end{bmatrix},$$

where $\mathbf{X}_{\mathrm{i,j}}$ is the position of the i-th marker during j-th measurement, N is the number of markers, and $\widetilde{X}_{\mathrm{i,j}}$ is the fitted position of the i-th marker during j-th measurement in vision system coordinates

$$\widetilde{X}_{i,j} = R_j X_{\mathrm{m},i} + t_j,$$

where $R_j$ und $t_j$ are sensor rotation matrix and position during the j-th measurement. These can be computed using the singular-value decomposition (SVD) algorithm that minimizes Frobenius norm of $E_{\mathrm{m},j}$.

The matrix $E_a$ is defined as follows:

$$E_a = \begin{bmatrix} Y_1 - \widetilde{Y}_1 & \dots & Y_M - \widetilde{Y}_M \end{bmatrix},$$

where $\widetilde{Y}_j$ is the fitted position of the calibration artifact during j-th measurement

$$\widetilde{Y}_j = R_s^T R_j^T \left( t - R_j t_s - t_j \right).$$

and with

$Y_j$ being the position of calibration artifact during j-th measurement in scanner coordinates,
M being the number of measurements,
$X_{\mathrm{m},i}$ position of i-th markers in the reference coordinate system,
t position of the calibration artifact in vision system coordinates,
$t_s$ center of the scanner coordinate system in the reference coordinate system,
$R_s$ rotation of the scanner coordinate system in the reference coordinate system.

According to step 78, initial positions of the one or more tracking markers selected in step 74 and initial positions of the calibration artifact in respective 3D coordinates are estimated based on CAD data 80. According to step 82, error matrix $E$ is minimized using the Levenberg-Marquardt algorithm. Alternatively, any other algorithm suitable to minimize error matrix $E$ may be used.

According to step 84, calibration data as determined in step 82 is stored in non-volatile memory 28. The calibration data particularly represents how the sensor coordinate system 22 is transformed into reference coordinate system 50 as a function of respective marker positions in vision coordinate system 32.

## Claims

1. A method for calibrating a 3D measurement arrangement (10) that comprises a 3D vision subsystem (12), a 3D coordinate sensor (18) and a processing unit (26) having a non-volatile memory (28),

   - with the 3D vision subsystem (12) defining a vision measurement volume (42) and a vision coordinate system (32),
   - with the 3D coordinate sensor (18) being moveable within the vision measurement volume (42) and defining a sensor measurement volume (48) and a sensor coordinate system (22),
   - with the 3D coordinate sensor (18) carrying at least one optical tracking marker (34) and being configured for recording (66) first 3D coordinate data on a measurement object (20) relative to the sensor coordinate system (22), and
   - with the 3D vision subsystem (12) being configured for recording (68) second 3D coordinate data representing a respective marker position of said at least one optical tracking marker (34) relative to the vision coordinate system (32),

   the method comprising the steps of:

   positioning a calibration artifact (44) in the vision measurement volume (42),
   recording (66) a plurality of first 3D coordinate data on the calibration artifact (44) using the 3D coordinate sensor (18) in a series of recording steps, wherein the 3D coordinate sensor (18) is moved in the vision measurement volume (42) and positioned (24) at various sensor positions relative to the calibration artifact (44) from one recording step to another recording step in the series of recording steps,
   recording (68) a plurality of second 3D coordinate data at said various sensor positions in the vision measurement volume (42),

providing a reference coordinate system (50),

computing (82) both at least one marker coordinate position and a position of the sensor coordinate system (22) relative to the reference coordinate system (50) on the basis of the plurality of first 3D coordinate data and the plurality of second 3D coordinate data using joint computing steps, and

storing (84) calibration data into the non-volatile memory (28), with the calibration data representing the at least one marker coordinate position and the position of the sensor coordinate system (22) relative to the reference coordinate system (50),

**characterized in that** the joint computing steps comprise minimizing (82) a joint error matrix comprising a plurality of first and second error matrix terms, with the first error matrix terms representing marker positions at the various sensor positions, and with the second error matrix terms representing positions on the calibration artifact.

2. The method of claim 1, wherein initial marker coordinate positions and an initial position of the sensor coordinate system relative to the reference coordinate system (50) are estimated (78) from CAD design data (80).

3. The method of claim 1 or 2, wherein the calibration artifact (44) is held stationary within the vision measurement volume (42) during the series of recording steps.

4. The method of any of claims 1 3, wherein the plurality of first 3D coordinate data are determined with respect to a single feature on the calibration artifact (44).

5. The method of any of claims 1 to 4, wherein the calibration artifact (44) comprises a mechanical feature, in particular a sphere and/or a hole in a calibration body.

6. The method of any of claims 1 to 5, wherein the 3D coordinate sensor (18) is arranged on a fixture (30) and the fixture (30) is automatically moved within the vision measurement volume (42) in order to move the 3D coordinate sensor (18) from one recording step to another recording step in the series of recording steps.

7. The method of claim 6, wherein a further optical tracking marker is attached to the fixture (30), and wherein the marker coordinate positions and the position of the sensor coordinate system relative to the reference coordinate system are computed on the basis of the further optical tracking marker.

8. The method of any of claims 1 to 7, wherein the 3D coordinate sensor (18) has a plurality of optical tracking markers (34) attached in such a manner that at least two optical tracking markers are visible to the 3D vision subsystem (12) at a time, and wherein the second 3D coordinate data are recorded for the at least two optical tracking markers at a time.

9. The method of any of claims 1 to 8, wherein the 3D coordinate sensor (18) has a plurality of optical tracking markers (34) attached, with the plurality of optical tracking markers (34) comprising a first group of optical tracking markers that are visible to the 3D vision subsystem at any time during the series of recording steps, and comprising a second group of optical tracking markers that are not visible to the 3D vision subsystem at any time during the series of recording steps, and wherein the marker coordinate positions and the position of the sensor coordinate system relative to the reference coordinate system are exclusively computed (74) on the basis of the first group of optical tracking markers.

10. The method of any of claims 1 to 9, wherein the 3D coordinate sensor (18) comprises a 3D fringe projection sensor.

11. A 3D measurement arrangement (10) comprising a 3D vision subsystem (12), a 3D coordinate sensor (18) and a processing and control unit (26) having a non-volatile memory (28), with the 3D vision subsystem (12) defining a vision measurement volume (42) and a vision coordinate system (32), with the 3D coordinate sensor (18) being arranged on a fixture (30) so as to be automatically moveable within the vision measurement volume (42) and defining a sensor measurement volume (48) and a sensor coordinate system (22), with the 3D coordinate sensor (18) carrying at least one optical tracking marker (34) and being configured for recording first 3D coordinate data on a measurement object (20) relative to the sensor coordinate system (22), and with the 3D vision subsystem (12) being configured for recording second 3D coordinate data representing a respective marker position of said at least one optical tracking marker (34) relative to the vision coordinate system (32), wherein the processing and control unit (26) is configured to determine calibration data by executing the steps of:

recording (66) a plurality of first 3D coordinate data on a calibration artifact (44) positioned in the vision measurement volume (42) by using the 3D coordinate sensor (18) in a series of recording steps, wherein the processing and control unit (26) positions the 3D coordinate sensor (18) in the vision measurement volume (42) at various sensor positions relative to the calibration artifact (44) from one recording step to another recording step in the series of recording steps,

recording (68) a plurality of second 3D coordinate data at said various sensor positions in the vision measurement volume (42) using the 3D vision subsystem (12),

providing a reference coordinate system (50),

computing (82) both at least one marker coordinate position and a position of the sensor coordinate system (22) relative to the reference coordinate system (50) on the basis of the plurality of first 3D coordinate data and the plurality of second 3D coordinate data using joint computing steps, and

storing (84) calibration data into the non-volatile memory (28), with the calibration data representing the at least one marker coordinate position and the position of the sensor coordinate system relative to the reference coordinate system,

**characterized in that** the joint computing steps comprise minimizing (82) a joint error matrix comprising a plurality of first and second error matrix terms, with the first error matrix terms representing marker positions at the various sensor positions, and with the second error matrix terms representing positions on the calibration artifact.

## Patentansprüche

1. Verfahren zum Kalibrieren einer 3D-Messanordnung (10), die ein 3D-Sicht-Untersystem (12), einen 3D-Koordinatensensor (18) und eine Verarbeitungseinheit (26), die einen nichtflüchtigen Speicher (28) aufweist, umfasst,

- wobei das 3D-Sicht-Untersystem (12) ein Sichtmessvolumen (42) und ein Sichtkoordinatensystem (32) definiert,
- wobei der 3D-Koordinatensensor (18) in dem Sichtmessvolumen (42) bewegt werden kann und ein Sensormessvolumen (48) und ein Sensorkoordinatensystem (22) definiert,
- wobei der 3D-Koordinatensensor (18) mindestens eine optische Verfolgungsmarkierung (34) trägt und konfiguriert ist, erste 3D-Koordinatendaten eines Messobjekts (20) relativ zu dem Sensorkoordinatensystem (22) aufzuzeichnen (66), und
- wobei das 3D-Sicht-Untersystem (12) konfiguriert ist, zweite 3D-Koordinatendaten, die eine entsprechende Markierungsposition der mindestens einen optischen Verfolgungsmarkierung (34) relativ zu dem Sichtkoordinatensystem (32) darstellen, aufzuzeichnen (68),

wobei das Verfahren die folgenden Schritte umfasst:

Positionieren eines Kalibrierungsartefakts (44) in dem Sichtmessvolumen (42),

Aufzeichnen (66) mehrerer erster 3D-Koordinatendaten des Kalibrierungsartefakts (44) unter Verwendung des 3D-Koordinatensensors (18) in einer Reihe von Aufzeichnungsschritten, wobei der 3D-Koordinatensensor (18) in dem Sichtmessvolumen (42) bewegt wird und von einem Aufzeichnungsschritt zu einem weiteren Aufzeichnungsschritt in der Reihenfolge der Aufzeichnungsschritte an verschiedenen Sensorpositionen relativ zu dem Kalibrierungsartefakt (44) positioniert (24) wird,

Aufzeichnen (68) mehrerer zweiter 3D-Koordinatendaten an den verschiedenen Sensorpositionen in dem Sichtmessvolumen (42),

Bereitstellen eines Referenzkoordinatensystems (50),

Berechnen (82) sowohl mindestens einer Markierungskoordinatenposition als auch einer Position des Sensorkoordinatensystems (22) relativ zu dem Referenzkoordinatensystem (50) auf der Grundlage der mehreren ersten 3D-Koordinatendaten und der mehreren zweiten 3D-Koordinatendaten unter Verwendung gemeinsamer Berechnungsschritte, und

Speichern (84) von Kalibrierungsdaten in dem nichtflüchtigen Speicher (28), wobei die Kalibrierungsdaten die mindestens eine Markierungskoordinatenposition und die Position des Sensorkoordinatensystems (22) relativ zu dem Referenzkoordinatensystem (50) darstellen,

**dadurch gekennzeichnet, dass** die gemeinsamen Berechnungsschritte das Minimieren (82) einer gemeinsamen Fehlermatrix umfassen, die mehrere erste und zweite Fehlermatrixterme umfasst, wobei die ersten Fehlermatrixterme Markierungspositionen an den verschiedenen Sensorpositionen darstellen, und wobei die zweiten Fehlermatrixterme die Positionen auf dem Kalibrierungsartefakt darstellen.

**2.** Verfahren nach Anspruch 1, wobei anfängliche Markierungskoordinatenpositionen und eine anfängliche Position des Sensorkoordinatensystems relativ zu dem Referenzkoordinatensystem (50) aus CAD-Konstruktionsdaten (80) geschätzt (78) werden.

**3.** Verfahren nach Anspruch 1 oder 2, wobei das Kalibrierungsartefakt (44) während der Reihenfolge der Aufzeichnungsschritte in dem Sichtmessvolumen (42) stationär gehalten wird.

**4.** Verfahren nach einem der Ansprüche 1 bis 3, wobei die mehreren ersten 3D-Koordinatendaten bezüglich eines einzelnen Merkmals des Kalibrierungsartefakts (44) bestimmt werden.

**5.** Verfahren nach einem der Ansprüche 1 bis 4, wobei das Kalibrierungsartefakt (44) ein mechanisches Merkmal, insbesondere eine Kugel und/oder ein Loch in einem Kalibrierungskörper umfasst.

**6.** Verfahren nach einem der Ansprüche 1 bis 5, wobei der 3D-Koordinatensensor (18) auf einer Haltevorrichtung (30) angeordnet ist und die Haltevorrichtung (30) in dem Sichtmessvolumen (42) automatisch bewegt wird, um den 3D-Koordinatensensor (18) von einem Aufzeichnungsschritt zu einem weiteren Aufzeichnungsschritt in der Reihenfolge der Aufzeichnungsschritte zu bewegen.

**7.** Verfahren nach Anspruch 6, wobei eine weitere optische Verfolgungsmarkierung an der Haltevorrichtung (30) befestigt ist, und wobei die Markierungskoordinatenpositionen und die Positionen des Sensorkoordinatensystems relativ zu dem Referenzkoordinatensystem auf der Grundlage der weiteren optischen Verfolgungsmarkierung berechnet werden.

**8.** Verfahren nach einem der Ansprüche 1 bis 7, wobei der 3D-Koordinatensensor (18) mehrere optische Verfolgungsmarkierungen (34) aufweist, die derart befestigt sind, dass jeweils mindestens zwei optische Verfolgungsmarkierungen für das 3D-Sicht-Untersystem (12) sichtbar sind, und wobei die zweiten 3D-Koordinatendaten jeweils für die mindestens zwei optischen Verfolgungsmarkierungen aufgezeichnet werden.

**9.** Verfahren nach einem der Ansprüche 1 bis 8, wobei an dem 3D-Koordinatensensor (18) mehrere optische Verfolgungsmarkierungen (34) befestigt sind, wobei die mehreren optischen Verfolgungsmarkierungen (34) eine erste Gruppe von optischen Verfolgungsmarkierungen umfasst, die für das 3D-Sicht-Untersystem zu jeder Zeit während der Reihe von Aufzeichnungsschritten sichtbar sind, und eine zweite Gruppe von optischen Verfolgungsmarkierungen umfasst, die für das 3D-Sicht-Untersystem zu keiner Zeit während der Reihe von Aufzeichnungsschritten sichtbar sind, und wobei die Markierungskoordinatenpositionen und die Position des Sensorkoordinatensystems relativ zu dem Referenzkoordinatensystem ausschließlich auf der Grundlage der ersten Gruppe von optischen Verfolgungsmarkierungen berechnet (74) werden.

**10.** Verfahren nach einem der Ansprüche 1 bis 9, wobei der 3D-Koordinatensensor (18) einen 3D-*Streifenprojektionssensor* umfasst.

**11.** 3D-Messanordnung (10), die ein 3D-Sichtssystem (12), einen 3D-Koordinatensensor (18) und eine Verarbeitungs- und Steuereinheit (26), die einen nichtflüchtigen Speicher (28) aufweist, umfasst, wobei das 3D-Sicht-Untersystem (12) ein Sichtmessvolumen (42) und ein Sichtkoordinatensystem (32) definiert, wobei der 3D-Koordinatensensor (18) auf einer Haltevorrichtung (30) angeordnet ist, um in dem Sichtmessvolumen (42) automatisch bewegt werden zu können, und ein Sensormessvolumen (48) und ein Sensorkoordinatensystem (22) definiert, wobei der 3D-Koordinatensensor (18) mindestens eine optische Verfolgungsmarkierung (34) trägt und konfiguriert ist, erste 3D-Koordinatendaten eines Messobjekts (20) relativ zu dem Sensorkoordinatensystem (22) aufzuzeichnen, und wobei das 3D-Sicht-Untersystem (12) konfiguriert ist, zweite 3D-Koordinatendaten, die eine entsprechende Markierungsposition der mindestens einen optischen Verfolgungsmarkierung (34) relativ zu dem Sichtkoordinatensystem (32) darstellen, aufzuzeichnen, wobei die Verarbeitungs- und Steuereinheit (26) konfiguriert ist, durch das Ausführen der folgenden Schritte Kalibrierungsdaten zu bestimmen:

Aufzeichnen (66) mehrerer erster 3D-Koordinatendaten eines Kalibrierungsartefakts (44), das in dem Sichtmessvolumen (42) positioniert ist, durch Verwenden des 3D-Koordinatensensors (18) in einer Reihe von Aufzeichnungsschritten, wobei die Verarbeitungs- und Steuereinheit (26) den 3D-Koordinatensensor (18) in dem Sichtmessvolumen (42) an verschiedenen Sensorpositionen relativ zu dem Kalibrierungsartefakt (44) von einem Aufzeichnungsschritt zu einem weiteren Aufzeichnungsschritt in der Reihenfolge der Aufzeichnungsschritte positioniert,

Aufzeichnen (68) mehrerer zweiter 3D-Koordinatendaten an den verschiedenen Sensorpositionen in dem Sichtmessvolumen (42) unter Verwendung des 3D-Sicht-Untersystems (12),

Bereitstellen eines Referenzkoordinatensystems (50),

Berechnen (82) sowohl mindestens einer Markierungskoordinatenposition als auch einer Position des Sensorkoordinatensystems (22) relativ zu dem Referenzkoordinatensystem (50) auf der Grundlage der mehreren ersten 3D-Koordinatendaten und den mehreren zweiten 3D-Koordinatendaten unter Verwendung gemeinsamer Berechnungsschritte, und

Speichern (84) von Kalibrierungsdaten in dem nichtflüchtigen Speicher (28), wobei die Kalibrierungsdaten die mindestens eine Markierungskoordinatenposition und die Position des Sensorkoordinatensystems relativ zu dem Referenzkoordinatensystem darstellen,

**dadurch gekennzeichnet, dass** die gemeinsamen Berechnungsschritte das Minimieren (82) einer gemeinsamen Fehlermatrix umfassen, die mehrere erste und zweite Fehlermatrixterme umfasst, wobei die ersten Fehlermatrixterme Markierungspositionen an den verschiedenen Sensorpositionen darstellen, und wobei die zweiten Fehlermatrixterme die Positionen auf dem Kalibrierungsartefakt darstellen.


## Revendications

1. Procédé d'étalonnage d'un agencement de mesure 3D (10) qui comprend un sous-système de vision 3D (12), un capteur de coordonnées 3D (18) et une unité de traitement (26) pourvue d'une mémoire non volatile (28),

   - le sous-système de vision 3D (12) définissant un volume de mesure de vision (42) et un système de coordonnées de vision (32),
   - le capteur de coordonnées 3D (18) étant déplaçable au sein du volume de mesure de vision (42) et définissant un volume de mesure de capteur (48) et un système de coordonnées de capteur (22),
   - le capteur de coordonnées 3D (18) portant au moins un marqueur de suivi optique (34) et étant configuré pour enregistrer (66) des premières données de coordonnées 3D sur un objet de mesure (20) par rapport au système de coordonnées de capteur (22), et
   - le sous-système de vision 3D (12) étant configuré pour enregistrer (68) des deuxièmes données de coordonnées 3D représentant une position de marqueur respective dudit au moins un marqueur de suivi optique (34) par rapport au système de coordonnées de vision (32),

   le procédé comprenant les étapes suivantes :

   positionnement d'un artéfact d'étalonnage (44) dans le volume de mesure de vision (42),
   enregistrement (66) d'une pluralité de premières données de coordonnées 3D sur l'artéfact d'étalonnage (44) au moyen du capteur de coordonnées 3D (18) dans une série d'étapes d'enregistrement, le capteur de coordonnées 3D (18) étant déplacé dans le volume de mesure de vision (42) et positionné (24) à diverses positions de capteur par rapport à l'artéfact d'étalonnage (44) d'une étape d'enregistrement à une autre étape d'enregistrement dans la série d'étapes d'enregistrement,
   enregistrement (68) d'une pluralité de deuxièmes données de coordonnées 3D auxdites diverses positions de capteur dans le volume de mesure de vision (42),
   fourniture d'un système de coordonnées de référence (50),
   calcul (82) à la fois d'au moins une position de coordonnées de marqueur et d'une position du système de coordonnées de capteur (22) par rapport au système de coordonnées de référence (50) sur la base de la pluralité de premières données de coordonnées 3D et de la pluralité de deuxièmes données de coordonnées 3D au moyen d'étapes de calcul conjuguées, et
   stockage (84) de données d'étalonnage dans la mémoire non volatile (28), les données d'étalonnage représentant l'au moins une position de coordonnées de marqueur et la position du système de coordonnées de capteur (22) par rapport au système de coordonnées de référence (50),
   **caractérisé en ce que** les étapes de calcul conjuguées comprennent la minimisation (82) d'une matrice d'erreurs conjuguée comprenant une pluralité de premiers et deuxièmes termes de matrice d'erreurs, les premiers termes de matrice d'erreurs représentant des positions de marqueur aux diverses positions de marqueur et les deuxièmes termes de matrice d'erreurs représentant des positions sur l'artéfact d'étalonnage.

2. Procédé selon la revendication 1, dans lequel des positions de coordonnées de marqueur initiales et une position initiale du système de coordonnées de capteur par rapport au système de coordonnées de référence (50) sont estimées (78) à partir de données de conception CAO (80).

3. Procédé selon la revendication 1 ou 2, dans lequel l'artéfact d'étalonnage (44) est maintenu immobile au sein du volume de mesure de vision (42) au cours de la série d'étapes d'enregistrement.

4. Procédé selon l'une quelconque des revendications 1 à 3, dans lequel la pluralité de premières coordonnées 3D sont déterminées par rapport à un seul élément caractéristique sur l'artéfact d'étalonnage (44) .

5. Procédé selon l'une quelconque des revendications 1 à 4, dans lequel l'artéfact d'étalonnage (44) comprend un élément caractéristique mécanique, plus particulièrement une sphère et/ou un trou dans un corps d'étalonnage.

6. Procédé selon l'une quelconque des revendications 1 à 5, dans lequel le capteur de coordonnées 3D (18) est agencé sur une fixation (30) et la fixation (30) est automatiquement déplacée au sein du volume de mesure de vision (42) afin de déplacer le capteur de coordonnées 3D (18) d'une étape d'enregistrement à une autre étape d'enregistrement dans la série d'étapes d'enregistrement.

7. Procédé selon la revendication 6, dans lequel un marqueur de suivi optique supplémentaire est attaché à la fixation (30), et dans lequel les positions de coordonnées de marqueur et la position du système de coordonnées de capteur par rapport au système de coordonnées de référence sont calculées sur la base du marqueur de suivi optique supplémentaire.

8. Procédé selon l'une quelconque des revendications 1 à 7, dans lequel le capteur de coordonnées 3D (18) est pourvu d'une pluralité de marqueurs de suivi optique (34) attachés de telle manière qu'au moins deux marqueurs de suivi optique soient visibles par le sous-système de vision 3D (12) à la fois, et dans lequel les deuxièmes données de coordonnées 3D sont enregistrées pour les au moins deux marqueurs de suivi optique à la fois.

9. Procédé selon l'une quelconque des revendications 1 à 8, dans lequel le capteur de coordonnées 3D (18) est pourvu d'une pluralité de marqueurs de suivi optique (34) attachés, la pluralité de marqueurs de suivi optique (34) comprenant un premier groupe de marqueurs de suivi optique qui sont visibles par le sous-système de vision 3D à tout instant au cours de la série d'étapes d'enregistrement, et comprenant un deuxième groupe de marqueurs de suivi optique qui ne sont pas visibles par le sous-système de vision 3D à tout instant au cours de la série d'étapes d'enregistrement, et dans lequel les positions de coordonnées de marqueur et la position du système de coordonnées de capteur par rapport au système de coordonnées de référence sont exclusivement calculées (74) sur la base du premier groupe de marqueurs de suivi optique.

10. Procédé selon l'une quelconque des revendications 1 à 9, dans lequel le capteur de coordonnées 3D (18) comprend un capteur de projection de franges 3D.

11. Agencement de mesure 3D (10) comprenant un sous-système de vision 3D (12), un capteur de coordonnées 3D (18) et une unité de traitement et de commande (26) pourvue d'une mémoire non volatile (28), le sous-système de vision 3D (12) définissant un volume de mesure de vision (42) et un système de coordonnées de vision (32), le capteur de coordonnées 3D (18) étant agencé sur une fixation (30) de façon à être automatiquement déplaçable au sein du volume de mesure de vision (42) et définissant un volume de mesure de capteur (48) et un système de coordonnées de capteur (22), le capteur de coordonnées 3D (18) portant au moins un marqueur de suivi optique (34) et étant configuré pour enregistrer des premières données de coordonnées 3D sur un objet de mesure (20) par rapport au système de coordonnées de capteur (22), et le sous-système de vision 3D (12) étant configuré pour enregistrer des deuxièmes données de coordonnées 3D représentant une position de marqueur respective dudit au moins un marqueur de suivi optique (34) par rapport au système de coordonnées de vision (32), l'unité de traitement et de commande (26) étant configurée pour déterminer des données d'étalonnage en exécutant les étapes suivantes :

enregistrement (66) d'une pluralité de premières données de coordonnées 3D sur un artéfact d'étalonnage (44) positionné dans le volume de mesure de vision (42) au moyen du capteur de coordonnées 3D (18) dans une série d'étapes d'enregistrement, l'unité de traitement et de commande (26) positionnant le capteur de coordonnées 3D (18) dans le volume de mesure de vision (42) à diverses positions de capteur par rapport à l'artéfact d'étalonnage (44) d'une étape d'enregistrement à une autre étape d'enregistrement dans la série d'étapes d'enregistrement,
enregistrement (68) d'une pluralité de deuxièmes données de coordonnées 3D auxdites diverses positions de capteur dans le volume de mesure de vision (42) au moyen du sous-système de vision 3D,
fourniture d'un système de coordonnées de référence (50),

calcul (82) à la fois d'au moins une position de coordonnées de marqueur et d'une position du système de coordonnées de capteur (22) par rapport au système de coordonnées de référence (50) sur la base de la pluralité de premières données de coordonnées 3D et de la pluralité de deuxièmes données de coordonnées 3D au moyen d'étapes de calcul conjuguées, et

stockage (84) de données d'étalonnage dans la mémoire non volatile (28), les données d'étalonnage représentant l'au moins une position de coordonnées de marqueur et la position du système de coordonnées de capteur par rapport au système de coordonnées de référence,

**caractérisé en ce que** les étapes de calcul conjuguées comprennent la minimisation (82) d'une matrice d'erreurs conjuguée comprenant une pluralité de premiers et deuxièmes termes de matrice d'erreurs, les premiers termes de matrice d'erreurs représentant des positions de marqueur aux diverses positions de marqueur et les deuxièmes termes de matrice d'erreurs représentant des positions sur l'artéfact d'étalonnage.

Fig. 1

Fig. 2

Start

Position Calibration Artifact — 60

J = 1 — 62

64 — Position 3D Sensor at J

66 — Record 3D Sensor Data

68 — Record 3D Vision Data

J = J + 1 — 72

70 — Next Position?

74 — Select Markers

76 — Establish Error Matrix

78 — Estimate Intital Positions

CAD — 80

82 — Minimize Error Matrix Using Levenberg-Marquardt Algorithm

84 — Store Calibration Data

End

Fig. 3

**EP 3 693 697 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080239327 A1
- US 2010017178 A1
- EP 3321883 A1